# FASCICULE DE BREVET EUROPEEN

(11) **EP 1 343 624 B1**
(45) Date de publication et mention de la délivrance du brevet: **11.01.2006**
(21) Numéro de dépôt: 01991754.1
(22) Date de dépôt: 23.11.2001
(51) Int. Cl.: B29C 47/32

(54) **DISPOSITIF D'EXTRUSION POUR FABRIQUER UN PRODUIT A BASE D'UN MELANGE CAOUTCHOUTEUX**
EXTRUSIONSVORRICHTUNG ZUR HERSTELLUNG VON PRODUKTEN AUS KAUTSCHUKMISCHUNGEN
EXTRUDING DEVICE FOR MAKING A RUBBER-MIXTURE BASED PRODUCT

(30) Priorité: 27.11.2000 FR 0015460
(43) Date de publication de la demande: 17.09.2003
(73) Titulaire: Société de Technologie Michelin, 63040 Clermont-Ferrand Cedex 09 (FR); MICHELIN RECHERCHE ET TECHNIQUE S.A., CH-1763 Granges-Paccot (CH)
(72) Inventeur: LAMOINE, Philippe, F-63000 Clermont-Ferand (FR); CROSNIER, Gérard, F-63122 Ceyrat (FR); NICOLAS, Serge, F-63100 Clermont-Ferrand (FR)
(74) Mandataire: Bauvir, Jacques
(86) Numéro de dépôt international: PCT/EP2001/013644
(87) Numéro de publication internationale: WO 2002/042053

(56) Documents cités:
- DE-A- 4 105 484
- US-A- 4 304 539
- US-A- 4 744 745
- US-A- 5 017 118
- PATENT ABSTRACTS OF JAPAN vol. 013, no. 588 (M-912), 25 décembre 1989 (1989-12-25) -& JP 01 247133 A (BRIDGESTONE CORP), 3 octobre 1989 (1989-10-03)
- PATENT ABSTRACTS OF JAPAN vol. 007, no. 269 (M-259), 30 novembre 1983 (1983-11-30) -& JP 58 148017 A (HITACHI DENSEN KK), 3 septembre 1983 (1983-09-03)

## Description

L'invention concerne un dispositif d'extrusion pour fabriquer un produit à base d'un mélange caoutchouteux sous forme d'une bande mince.

L'invention concerne plus particulièrement un dispositif permettant la réalisation de produit profilé à base de mélange caoutchouteux sous forme d'une bande très mince qui peut être très large et peut être directement déposée sur une forme, un tambour ou directement superposée en sortie du dispositif à un autre matériau.

Dans le domaine de la fabrication des enveloppes de pneumatiques, on réalise des produits semi-finis constitués par des mélanges de caoutchouc qui sont ensuite assemblés les uns aux autres. En fonction de la température des produits, de la nature des mélanges caoutchouteux qui les constituent, des difficultés sont fréquemment rencontrées pour faire adhérer un produit à l'autre lors de la fabrication du pneumatique. La solution utilisée pendant longtemps par les manufacturiers consistait à appliquer sur un des produits une solution de caoutchouc dissout dans un solvant organique. Désormais, dans un souci de protection de l'environnement, on cherche à supprimer l'utilisation de tels solvants. Il est donc nécessaire de recourir à de nouvelles solutions.

Une solution consiste à déposer entre les deux produits " à coller ", une couche très fine de produit caoutchouteux ayant un fort pouvoir adhérent et que l'on nomme souvent " gomme de liaison ". Une telle gomme de liaison est, par ailleurs, depuis longtemps utilisée dans le domaine du rechapage pour réaliser la liaison entre la carcasse cuite et une nouvelle bande de roulement.

Afin de pouvoir poser directement en sortie d'extrudeuse une telle couche, notamment pour conserver sa température, son collant ainsi que les autres caractéristiques de la gomme de liaison, et également d'un point de vue industriel, il est particulièrement intéressant de fabriquer directement une bande très mince susceptible de faire toute la largeur de l'élément à recouvrir. Ainsi par exemple pour la fabrication d'un pneumatique à rechaper, on cherche à réaliser une bande de largeur identique à celle de la carcasse cuite de pneumatique et ayant une épaisseur de l'ordre de quelques dixièmes de millimètres.

De plus, on cherche à faire des enveloppes de pneumatiques de façon sans cesse plus précise. Cette précision de fabrication dépend notamment du respect des dimensions de produits en caoutchouc, en particulier la précision et la constance de l'épaisseur et de la largeur des produits dont l'assemblage constitue l'enveloppe de pneumatique.

Différentes catégories d'appareils sont déjà connues pour réaliser l'extrusion de caoutchouc. Les extrudeuses qui comportent de façon classique une ou plusieurs vis d'extrusion débouchant sur une chambre d'accumulation et refoulant le mélange caoutchouteux jusqu'à un orifice d'extrusion, se divisent en deux catégories :
- les extrudeuses appelées couramment "extrudeuses nez à rouleau" qui sont caractérisées par leur lame d'extrusion constituée par la surface extérieure d'un rouleau qui coopère avec une paroi fixe,
- les extrudeuses dites " extrudeuses à nez plat " caractérisées par leur lame d'extrusion constituée de parois fixes.

Ces extrudeuses permettent d'extruder, en grande longueur, un produit dont le profil est sensiblement constant avec des avantages différents pour chaque catégorie d'extrudeuses. Quelle que soit cette catégorie, la largeur de la bande extrudée obtenue est limitée par rapport au diamètre de la vis d'extrusion ou de l'entraxe des vis d'extrusion s'il s'agit d'une extrudeuse comportant plusieurs vis d'extrusion. En effet, si la largeur du produit et donc la largeur de l'orifice d'extrusion est très grand par rapport à ce diamètre, on aura des problèmes d'approvisionnement pour amener suffisamment de mélange avec un débit correct jusqu'à la lame et également des difficultés de rétention de mélange dans la lame ainsi que des difficultés de répartition du mélange, des pressions et des débits sur toute la largeur de l'orifice d'extrusion.

Ces différents appareillages permettent donc d'obtenir des produits de largeur limitée. Cette largeur est d'autant plus limitée que, dans le souci industriel d'avoir des machines présentant un faible encombrement, on cherche à limiter la taille de la ou des vis d'extrusion.

Afin de remédier à ces problèmes, la publication FR-2 294 039 décrit une extrudeuse associée à une calandre permettant la réalisation de bande large et mince de produit à base de mélange caoutchouteux. L'extrudeuse comporte une vis d'extrusion qui refoule le mélange caoutchouteux dans une chambre d'accumulation à la sortie de laquelle sont disposés deux rouleaux dont les axes sont perpendiculaires à l'axe de la vis d'extrusion et dans l'entrefer desquels la bande est " proniéx ".

Un tel dispositif pose, pour une bande large, des difficultés techniques non négligeables qui peuvent jouer sur la qualité du produit. En effet, la taille de l'orifice d'extrusion est très éloignée de la largeur finale du produit ce qui entraîne un problème d'entraînement de la gomme et de répartition irrégulière sur une surface beaucoup plus large, au même titre que ce qui a été expliqué précédemment pour une lame d'extrusion de taille très supérieure au diamètre de la vis d'extrusion. Ce qui entraîne également des risques d'avoir une largeur de produit qui ne soit pas constante.

Par ailleurs un tel dispositif est très encombrant puisqu'il nécessite un espace latéral important dans la direction de la largeur de la bande pour permettre d'obtenir une telle largeur et un encombrement axial, dans la direction de la vis d'extrusion, également important.

Le document JP 1-247133 décrit une extrudeuse à cylindre dans laquelle la chambre est équipée de couples photo détecteurs installés sur les parois axialement opposées de manière précisément à mesurer la quantité de mélange stocké temporairement dans la chambre afin d'éviter les variations d'alimentation et les variations d'épaisseur des profilés qui s'en suivent. Cette adaptation vise à corriger les effets négatifs d'une distribution axiale non homogène de l'alimentation en mélange à l'entrée du dispositif.

L'invention vise à pallier les inconvénients de ces différents dispositifs.

Dans ce qui suit, on désignera par " axial ", " radial " et «circonférentielle », les directions parallèles respectivement aux directions axiales, radiales et circonférentielles par rapport au rouleau du dispositif d'extrusion.

Selon l'invention, le dispositif d'extrusion pour fabriquer un produit à base d'un mélange caoutchouteux, comprend un rouleau rotatif, un orifice d'entrée dudit mélange caoutchouteux et une voûte recouvrant circonfentiellement partiellement la surface du rouleau, le mélange caoutchouteux étant refoulé à partir de l'orifice d'entrée dans l'entrefer situé entre la voûte et le rouleau vers un orifice d'extrusion définissant le profil du produit, délimité par une paroi qui coopère avec la surface extérieure du rouleau, la voûte porte sur sa surface intérieure orientée vers le rouleau des filets saillants afin de délimiter avec la surface du rouleau une chambre de plastification du mélange, deux aux moins des filets s'étendant sensiblement axialement..

L'orifice d'extrusion s'étend ainsi dans la direction axiale, direction de l'axe du rouleau qui réalise avec la voûte un travail de plastification efficace de la gomme, ce qui permet l'obtention d'une bande large avec un encombrement limité du dispositif correspondant à la longueur du rouleau. Bien entendu, l'obtention avec le même dispositif de bande de plus faible largeur voire de bandelette n'est absolument pas exclue.

Avantageusement, les deux filets s'étendant sensiblement axialement sont constitués par les filets situés le plus près de l'orifice d'extrusion, ce qui permet d'assurer notamment la direction et la répartition du mélange vers l'orifice d'extrusion.

On peut également prévoir que la zone de la voûte formant la chambre de plastification sera délimitée transversalement par deux bords de réception des fuites de mélange caoutchouteux. Ce qui permet de maîtriser la largeur du produit extrudé. Ces systèmes de réception des fuites peuvent être équipés des dispositifs d'étanchéité classiques (joints ... ).

Selon une variante de réalisation de l'invention, la zone de la voûte formant la chambre de plastification est divisée en secteurs, deux secteurs consécutifs étant séparés par des filets saillants parallèles entre eux, s'étendant sensiblement axialement.

Selon une autre variante, la zone de la voûte formant la chambre de plastification présente des filets hélicoïdaux ou des filets hélicoïdaux ayant sur un même filet un pas à gauche puis à droite ou inversement. Différentes formes de filets peuvent, en effet, être choisies afin d'obtenir un travail différent du mélange caoutchouteux, ce choix dépendant notamment de la nature du mélange caoutchouteux.

Avantageusement, la paroi est constituée par une lame fixe qui porte une alvéole s'étendant sensiblement axialement et séparée du dernier secteur de la voûte, en position fermée du dispositif, par un filet s'étendant sensiblement axialement porté par ladite voûte, l'avéole de la lame présentant une longueur axiale supérieure à celle dudit filet. La création de cette divergence à la fin du parcours du mélange caoutchouteux permet au mélange de se répartir sur l'ensemble de la longueur de l'alvéole et garantit ainsi la constance de l'épaisseur et de la largeur du produit profilé sans générer de bavures en récupérant les fuites latérales éventuelles.

D'autres caractéristiques et avantages apparaîtront à la lecture d'un exemple de réalisation d'un dispositif d'extrusion conforme à l'invention en référence auxdessins dans lesquels :
- la figure 1 est une représentation perspective partielle du dispositif conforme à l'invention en position ouverte,
- la figure 2 est une représentation perspective de certains éléments (lame et voûte) du dispositif représenté sur la figure 1 en position fermée,

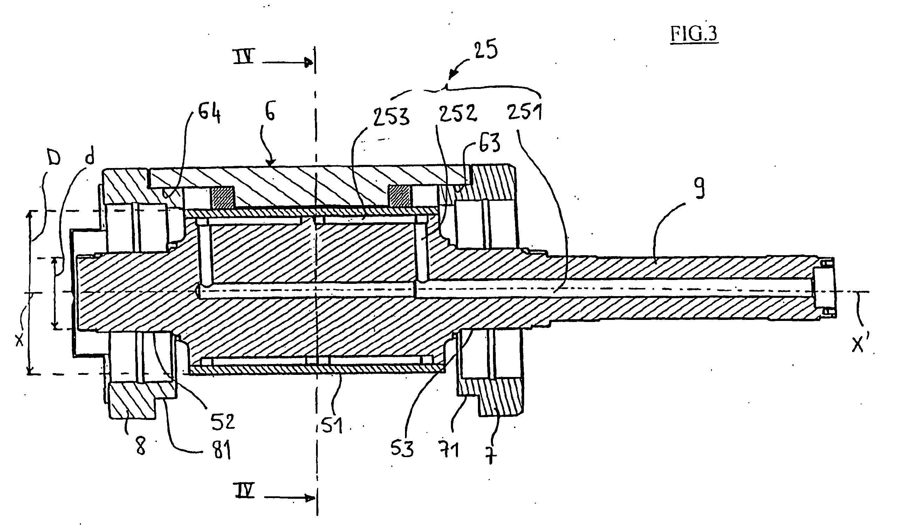

- la figure 3 est une coupe axiale du dispositif représenté sur la figure 1,
- la figure 4 est une coupe radiale du dispositif représenté sur la figure 3 selon la ligne IV-IV,
- la figure 5 est une représentation perspective identique à celle de la figure 2 selon une variante de réalisation de l'invention,
- la figure 6 est une coupe radiale identique à la figure 4 selon une autre variante de réalisation de l'invention,
- la figure 7 est une représentation perspective schématique d'une variante de réalisation des filets de voûte du dispositif représenté à la figure 2,
- la figure 8 est une représentation perspective schématique d'une autre variante de réalisation des filets de voûte du dispositif représenté à la figure 2,
- la figure 9 est une coupe radiale schématique d'une application du dispositif conforme à l'invention.

Dans ce qui suit, on nommera avec les mêmes références les pièces identiques dans les différentes variantes de réalisation de l'invention représentées sur les figures.

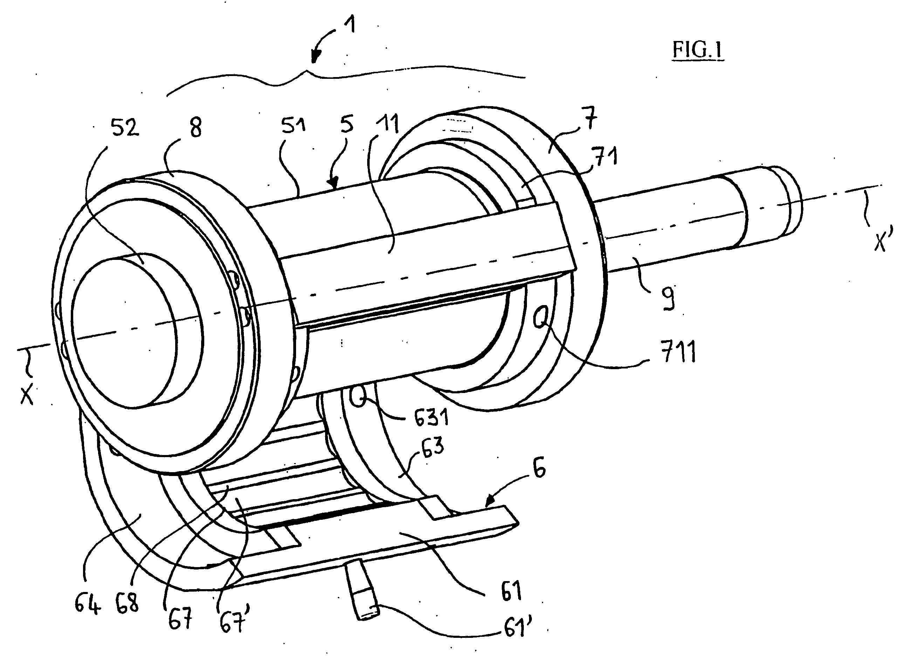

Selon la figure 1, le dispositif d'extrusion 1 comprend un rouleau 5 rotatif autour de son axe XX' possédant une surface extérieure 51, une voûte 6 qui délimite avec la surface 51 une chambre de plastification d'un mélange caoutchouteux et recouvre circonférentiellement partiellement le rouleau 5. Aux deux extrémités transversales 61 et 62 de la voûte 6, sont situés un orifice d'entrée 15 du mélange caoutchouteux et un orifice d'extrusion 21 du produit profilé, le mélange caoutchouteux étant refoulé à partir de l'orifice d'entrée, dans l'entrefer situé entre la voûte 6 et le rouleau 5 vers l'orifice d'extrusion 21.

Le rouleau 5 est monté sur un arbre 9 dont il est solidaire en rotation, ici l'arbre 9 et le rouleau 5 sont constitués par une même pièce mais on peut envisager qu'il s'agisse de deux pièces distinctes. Le rouleau 5 comporte ainsi deux épaulements 52 et 53 de diamètre d (correspondant au diamètre de l'arbre 9) et la surface extérieure 51 du rouleau 5 correspond à la zone du rouleau 5 ayant un diamètre D supérieur à d.

Sur les deux épaulements 52 et 53 sont montés, par l'intermédiaire de roulements non représentés, deux flaques respectivement 7 et 8. Chaque flasque 7, 8 porte axialement intérieurement par rapport au centre du rouleau 5 un épaulement 71, 81 qui coopère respectivement avec un épaulement porté par chacune des deux extrémités axiales 63 et 64 de la voûte afin de permettre la fixation de cette dernière sur le dispositif.

L'épaulement 71 et l'épaulement de l'extrémité 63 sont fixés ensemble à l'aide de vis non représentées utilisant les trous de passage 711 portés par l'épaulement 71 du flasque 7 et 631 portés par l'extrémité 63, il en est de même pour la fixation de l'épaulement 81 et de l'épaulement porté par l'extrémité 64 de la voûte 6.

Il est clair que la liaison entre les épaulements 71, 81 et respectivement les épaulements 63, 64 pourraient être réalisée par tout autre moyen.

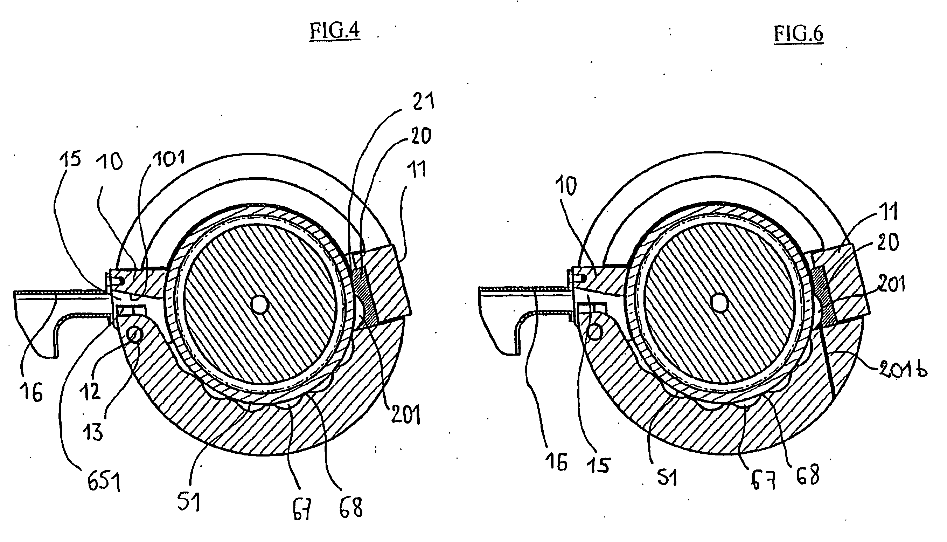

Comme on le voit sur les figures 1 et 4, deux éléments supports 10 et 11 sont montés respectivement entre le flasque 7 et le flasque 8, les deux éléments étant décalés circonférentiellement par rapport au rouleau 5. Les éléments 10 et 11 sont fixés rigidement aux flasques 7 et 8 par tout moyen approprié tel que des vis ou en réalisant une fabrication monobloc des éléments 10, 11, 7 et 8.

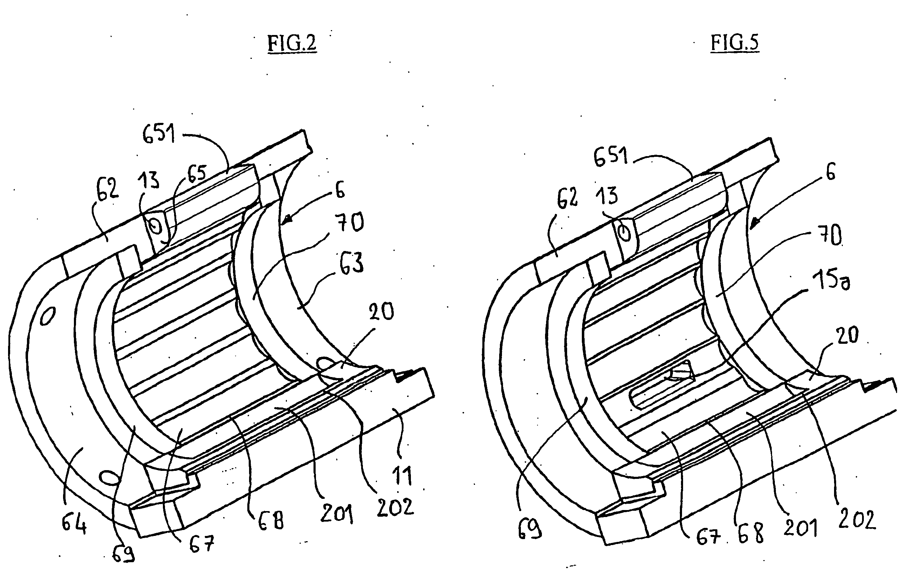

L'extrémité 62 de la voûte 6 est monté pivotante sur l'élément support 10 autour d'une tige 12 portée par ledit élément support qui coopère avec un trou de passage 13 portée par un rebord 65 porté par la voûte 6, comme le montre la figure 2.

La paroi 651 extérieure du rebord 65 constitue avec une paroi 101 portée par l'élément support 10 et en vis-à-vis de la paroi 651, un orifice d'entrée 15 pour le mélange caoutchouteux. Cet orifice d'entrée 15 débouche au contact de la surface 51 du rouleau 5. Afin d'éloigner l'accès à l'orifice d'entrée 15 du rouleau 5, pour des raisons essentiellement de sécurité, on peut prévoir la présence d'un canal d'accès 16 débouchant sur l'orifice d'entrée 15.

L'élément support 11 coopère avec l'extrémité opposée de la voûte 6 donc l'extrémité 61 pour permettre la fixation de cette extrémité, par exemple par des vis, et la fermeture du dispositif. Avantageusement la fixation peut être démontable, afin comme l'illustre la figure 1 de pouvoir faire pivoter la voûte 6 autour de l'axe 12 en utilisant une poignée 61' et d'avoir accès au rouleau 5 notamment pour nettoyer le dispositif.

Par ailleurs, comme le montrent plus particulièrement les figures 2 et 4, une lame d'extrusion 20 est montée intérieurement sur l'élément support 11 de sorte que la lame d'extrusion 20 délimite avec la surface 51 du rouleau 5 un orifice 21 d'extrusion du produit profilé. On pourrait également envisager d'avoir à la place d'une lame, une paroi mobile constituée par exemple par la surface extérieure d'un autre rouleau.

Le rouleau 5 porte, de façon connue en soi, un dispositif de refroidissement 25 constitué par un canal d'alimentation 251 qui traverse une des extrémités du rouleau pour, dans la zone centrale de ce dernier, distribuer son flux dans deux canaux radiaux 252 alimentant un " réseau " 253 de circulation du fluide de refroidissement passant sous la surface 51 du rouleau 5.

Cette extrémité du rouleau 5 est motorisée afin de permettre sa rotation axiale et montée sur un bâti qu'on ne détaillera pas ici, l'invention ne portant pas sur ce dernier.

On décrira dans ce qui suit plus en détails la voûte 6 afin de comprendre le fonctionnement du dispositif selon l'invention.

Comme le montre la figure 2, la zone centrale de la voûte 6 comporte une zone centrale 65 divisée en secteurs radiaux 67 présentant chacun une surface concave 67', deux secteurs 67 consécutifs étant séparés par un filet 68. Le rapport entre l'épaisseur de la bande de produit sortant et le passage entre le filet 68 et la surface 51 du rouleau 5 est au moins supérieure à 1 et fonction de l'épaisseur moyenne du produit pour que ce passage ne soit pas une limitation du débit de rentrée.

On a représenté ici des secteurs ayant des tailles et des rayons de courbure identiques, il est clair qu'on peut sans sortir du cadre de l'invention envisager des secteurs de taille et/ou de rayon de courbure différents ou variables.

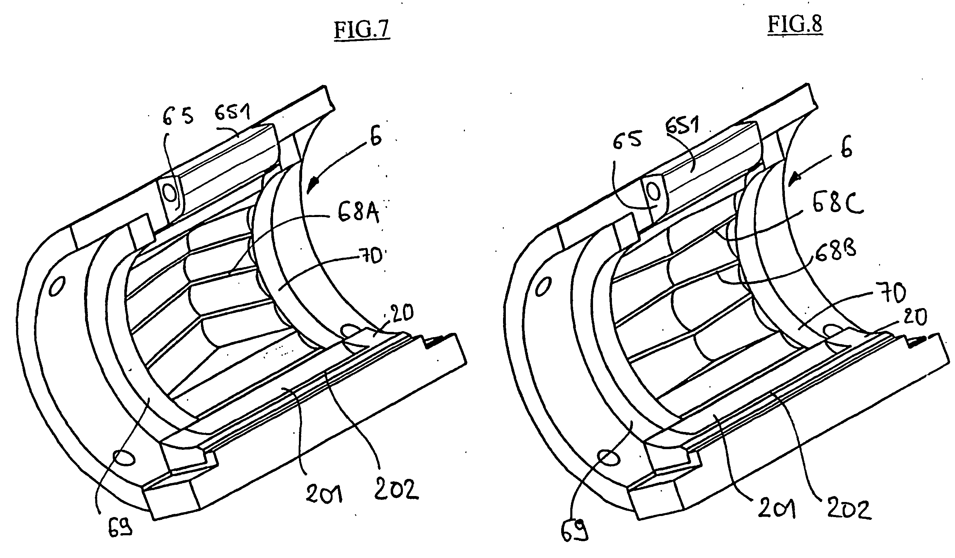

On peut également envisager que la voûte ne soit pas divisée en secteurs mais il est nécessaire qu'elle présente au moins deux filets s'étendant sensiblement axialement de sorte à guider le mélange vers l'orifice d'extrusion en le répartissant sur la largeur de ce dernier, d'autres filets de la voûte pouvant être orientés dans des directions différentes tels que des filets hélicoïdaux ou des filets convergents ou divergents par rapport aux filets axiaux, tels que des filets hélicoïdaux ayant un pas à droite puis un pas à gauche sur le même filet ou inversement tels que représentés sur les figures 7 et 8. Ainsi la figure 7 présentent des filets 68A qui divergent dans la direction des filets axiaux alors que la figure 8 présente des filets 68B divergents qui succèdent à des filets 68C convergents vers les filets axiaux.

Ces secteurs sont limités axialement par deux bords 69 et 70 de réception des fuites de mélange caoutchouteux comme on le verra lors du fonctionnement du dispositif

Le dernier secteur 67 de la voûte est séparé de la lame d'extrusion 20 par un filet 68, la lame d'extrusion portant elle-même une alvéole 201 plus longue axialement que les secteurs 67 de la voûte afin de créer une divergence qui va fixer par les bords de cette alvéole 201 la largeur de sortie du produit profilé. De plus, on prévoit également que cette alvéole 201 est plus profonde que les secteurs 67 de la voûte 6 afin de constituer une réserve de mélange caoutchouteux permettant d'assurer une continuité dans l'alimentation en mélange de l'orifice d'extrusion 21.

La lame 20 porte également un filet 202 qui suit dans le sens de rotation du rouleau 5 l'alvéole 201,ce filet définissant le profil du produit à base de mélange caoutchouteux obtenu, l'espacement entre la surface du filet 202 et le rouleau 5 délimitant ainsi l'épaisseur du profilé sortant.

On peut donc régler l'espacement entre la lame 20 et la surface extérieure 51 du rouleau 5 et donc définir la hauteur de l'orifice d'extrusion selon le profil de la bande de produit caoutchouteux à obtenir.

Ce dispositif est préférentiellement utilisé pour la réalisation de bande d'une épaisseur inférieure à 5 mm dans la mesure où le travail de plastification du mélange caoutchouteux effectué par le dispositif est nécessairement limité par la nature de l'outillage. Cependant on peut également envisager la réalisation de bande plus épaisse en fonction de la nature du mélange caoutchouteux et de la forme dans laquelle il est introduit dans l'orifice d'entrée d'un tel dispositif, par exemple en utilisant un mélange déjà travaillé préalablement avant son introduction.

Des organes supplémentaires pour augmenter le travail du mélange, tels que des doigts, peuvent également être prévus.

Plus particulièrement, le dispositif permet d'atteindre des bandes d'épaisseur inférieure à 0,5 mm donc d'obtenir des bandes très minces qui peuvent être directement posées sur une forme, un tambour de fabrication ou sur une carcasse mais également de réaliser un doublage de produit par superposition de la bande obtenue sur un autre matériau défilant en sortie de l'orifice d'extrusion du dispositif Ainsi grâce au dispositif conforme à l'invention, on peut également réaliser des bandes d'épaisseur inférieure à 0,3 mm.

Ce dispositif offre également un champ très large de possibilité d'utilisation en associant plusieurs dispositifs permettant, par exemple, de disposer en vis-à-vis deux dispositifs conformes à l'invention de sorte que le produit profilé issu de l'un des dispositifs soit doublé avec l'autre produit directement en sortie des orifices d'extrusion respectifs afin de réaliser un produit couramment appelé "complexe".

On peut également disposer plusieurs dispositifs conformes à l'invention successivement dans le sens de rotation d'un tambour ou plus généralement de la surface rotative, pour permettre le dépôt successif sur ledit tambour de plusieurs produits.

Par ailleurs, on peut également utiliser ce dispositif comme étant compris dans la tête d'extrusion d'une extrudeuse nez à rouleau, l'orifice d'entrée du dispositif étant disposé à l'extrémité d'au moins une vis d'extrusion portée par l'extrudeuse, afin d'améliorer la régulation de section de l'extrudât et l'homogénéisation du travail.

Dans l'exemple présenté ici, l'orifice d'entrée 15 et l'orifice d'extrusion 21 sont diamétralement opposés par rapport au rouleau, ce qui présente l'avantage de libérer environ 180° de la circonférence de la surface 51 du rouleau 5 afin de pouvoir déposer l'extrudât avec un minimum de contrainte mécanique sur un support choisi (rouleau, tambour, carcasse, intercalaire etc...). Bien entendu, en fonction de l'importance de la plastification que l'on souhaite obtenir ou en fonction du mélange, on peut prévoir plus ou moins de secteurs et donc une voûte plus ou moins longue circonférentiellement.

Dans ce qui suit, on décrira succinctement le fonctionnement du dispositif décrit dans l'exemple qui précède en référence plus particulièrement aux figures 2 et 4.

On alimente l'orifice d'entrée 15 par un mélange caoutchouteux A que l'on introduit dans le canal d'accès 16 soit sous forme d'une bande continue ou sous forme de plaques de façon identique à l'alimentation généralement réalisée pour une extrudeuse classique.

Le mélange caoutchouteux A est refoulé à partir de l'orifice d'entrée 15 dans la chambre de plastification délimitée par la voûte 6 et la surface 51 du rouleau 5 qui entraîne dans sa rotation le mélange A, en passant par les différents secteurs 67 et filets 68 de la voûte 6.

Les mélanges caoutchouteux fluant avec la montée en température qui se produit lors du travail du mélange, ces derniers peuvent constituer un trop plein qui se répand alors sur les bords de réception 69 et 70. Ces fuites circulent sur les bords de réception 69 et 70 en étant toujours entraînés par la rotation du rouleau 5.

Le mélange A est ainsi refoulé jusqu'à la lame 20 et plus exactement jusqu'à l'alvéole 201 où le mélange se répartit sur toute la longueur axiale de l'alvéole, les éventuelles fuites portées par les bords de réception venant également se déverser dans l'alvéole. La longueur axiale de l'alvéole 201 détermine ainsi la largeur du produit profilé qui sort alors par l'orifice d'extrusion constitué par la surface 51 du rouleau 5 et le filet 202 de la lame 20, alors que son épaisseur est définie par l'espacement entre le filet 202 et le rouleau 5.

On obtient ainsi un produit profilé de largeur constante qui peut être à la fois très large et très mince.

Bien entendu, on peut également envisager une lame ou une paroi ne portant pas d'alvéole de plus grande longueur que la zone centrale de la voûte et dans ce cas il peut être intéressant d'associer au dispositif un système de couteaux assurant la mise à largeur de l'extrudât et les ébarbages pouvant être recyclés éventuellement.

On donnera dans ce qui suit quelques exemples d'utilisation d'un dispositif d'extrusion conforme à l'invention. Bien entendu, ces exemples ne sauraient limiter la portée de l'invention à ces seules applications.

Selon une variante de réalisation de l'invention représentée sur la figure 5, le dispositif comporte un deuxième orifice d'entrée 15a d'un mélange caoutchouteux identique ou différent du premier localisé à l'intérieur de la chambre de plastification. Cette disposition peut permettre par exemple de réaliser une coextrusion.

Selon une autre variante de réalisation de l'invention représentée sur la figure 6, on peut prévoir la présence d'orifices de passages de fils textiles ou métalliques 201b à l'intérieur de l'alvéole 201 de la lame 20 afin de réaliser une nappe qui pourra être directement posée sur une forme ou un tambour.

Sans sortir du cadre de l'invention, on peut envisager de monter le dispositif conforme à l'invention sur la tête d'extrusion d'une extrudeuse de sorte que l'orifice d'entrée 15 du dispositif soit disposé à l'extrémité d'au moins une vis d'extrusion portée par l'extrudeuse.

On peut également envisager d'utiliser plusieurs dispositifs dans un appareillage d'extrusion de plusieurs mélanges caoutchouteux de sorte qu'au moins deux dispositifs soient disposés successivement dans le sens de rotation d'un tambour pour permettre le dépôt successif sur ledit tambour de plusieurs produits consécutivement ou au contraire que deux dispositifs soient disposés en vis-à-vis de sorte que le produit profilé issu de l'un des dispositifs soit doublé avec l'autre produit directement en sortie des orifices d'extrusion respectifs.

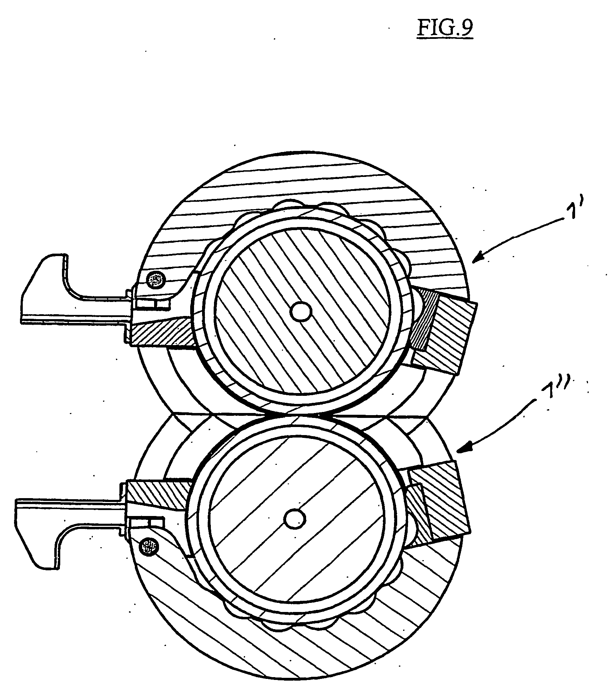

La figure 9 représente une autre utilisation qui associe deux dispositifs 1' et 1" conformes à l'invention pour réaliser un produit profilé doublé à l'aide du produit profilé issu de chaque dispositif. On peut ainsi envisager que ce produit profilé double soit repris par un rouleau en sortie des deux dispositifs.

L'utilisation du dispositif en sortie d'un appareillage d'extrusion comportant une calandre peut également être envisagée.

Ces exemples d'appareillages utilisant un ou plusieurs dispositifs selon l'invention ne sauraient limiter la portée de l'invention et donc réduire l'utilisation de tels dispositifs à ces seuls exemples.

## Revendications

1. Dispositif d'extrusion (1) pour fabriquer un produit à base d'un mélange caoutchouteux, qui comprend un rouleau rotatif (5), un orifice d'entrée (15) dudit mélange caoutchouteux et une voûte (6) recouvrant circonférentiellement partiellement la surface (51) du rouleau (5), le mélange caoutchouteux étant refoulé à partir de l'orifice d'entrée (15) dans l'entrefer situé entre la voûte (6) et le rouleau (5) vers un orifice d'extrusion (21) définissant le profil du produit, délimité par une paroi (20) qui coopère avec la surface extérieure (51) du rouleau (5), **caractérisé en ce que** la voûte (6) porte sur sa surface intérieure orientée vers le rouleau des filets saillants afin de délimiter avec la surface (51) du rouleau une chambre de plastification du mélange, deux au moins des filets s'étendant sensiblement axialement.

2. Dispositif selon la revendication 1, dans lequel les deux filets s'étendant sensiblement axialement sont constitués par les filets situés le plus près de l'orifice d'extrusion.

3. Dispositif selon l'une quelconque des revendications 1 ou 2, dans lequel la zone de la voûte formant la chambre de plastification est délimitée transversalement par deux bords de réception (69, 70) des fuites de mélange caoutchouteux.

4. Dispositif selon l'une quelconque des revendications 1 à 3, dans lequel la zone de la voûte (6) formant la chambre de plastification est divisée en secteurs (67), deux secteurs consécutifs (67) étant séparés par des filets saillants (68) parallèles entre eux et aux filets s'étendant sensiblement axialement.

5. Dispositif selon l'une quelconque des revendications 1 à 3, dans lequel la zone de la voûte (6) formant la chambre de plastification présente des filets hélicoïdaux.

6. Dispositif selon la revendication 5, dans lequel des filets hélicoïdaux présentent un pas à gauche et un pas à droite sur le même filet.

7. Dispositif selon l'une quelconque des revendications 1 à 6, dans lequel la paroi (20) est constituée par la surface d'un rouleau.

8. Dispositif selon l'une quelconque des revendications 1 à 6, dans lequel la paroi (20) est constituée par une lame fixe.

9. Dispositif selon la revendication 8, dans lequel la lame (20) porte une alvéole (201) s'étendant sensiblement axialement et séparée de la voûte, en position fermée du dispositif, par un filet (202) s'étendant sensiblement axialement porté par ladite voûte, l'avéole (201) de la lame (20) présentant une longueur axiale supérieure à celle dudit filet.

10. Dispositif selon la revendication 9, dans lequel la profondeur de l'alvéole (201) de la lame (20) est supérieure à celle des secteurs (67) de la voûte (6).

11. Dispositif selon l'une quelconque des revendications 1 à 10, dans lequel le rapport entre l'épaisseur de la bande de produit sortant et le passage entre un des deux filets proches de l'orifice d'extrusion (68) et la surface (51) du rouleau (5) est au moins supérieur à 1.

12. Dispositif selon l'une quelconque des revendications 1 à 11, dans lequel l'espacement entre la paroi (20) et la surface extérieure (51) du rouleau (5) définissant la hauteur de l'orifice d'extrusion est inférieur à 5 mm.

13. Dispositif selon la revendication 12, dans lequel la hauteur de l'orifice d'extrusion est inférieure à 0,5 mm.

14. Dispositif selon la revendication 13, dans lequel la hauteur de l'orifice d'extrusion est inférieure à 0,3 mm.

15. Dispositif selon l'une quelconque des revendications 1 à 14, dans lequel la voûte (6) est montée pivotante autour d'un axe de rotation porté par un support (10) solidaire du rouleau (5).

16. Dispositif selon l'une quelconque des revendications 1 à 15, qui comporte un deuxième orifice d'entrée d'un mélange caoutchouteux identique ou différent du premier localisé à l'intérieur de la chambre de plastification.

17. Dispositif selon l'une quelconque des revendications 9 à 16, qui comporte plusieurs orifices de passages de fils à l'intérieur de l'alvéole (201) de la lame (20).

18. Extrudeuse comportant une tête d'extrusion qui comprend un dispositif selon l'une quelconque des revendications 1 à 17, l'orifice d'entrée (15) du dispositif étant disposé à l'extrémité d'au moins une vis d'extrusion portée par l'extrudeuse.

19. Appareillage d'extrusion de plusieurs mélanges caoutchouteux comprenant au moins deux dispositifs selon l'une quelconque des revendications 1 à 17 disposés successivement dans le sens de rotation d'un tambour pour permettre le dépôt successif sur ledit tambour de plusieurs produits consécutivement.

20. Appareillage de doublage de deux produits profilés qui comprend au moins deux dispositifs selon l'une quelconque des revendications 1 à 17, les deux dispositifs étant disposés en vis-à-vis de sorte que le produit profilé issu de l'un des dispositifs soit doublé avec l'autre produit directement en sortie des orifices d'extrusion respectifs.

21. Appareillage d'extrusion comportant une calandre en sortie de laquelle est disposé un dispositif selon l'une quelconque des revendications 1 à 17.

## Patentansprüche

1. Extrusionsvorrichtung (1) zur Herstellung eines Produktes auf der Basis einer Kautschukmischung, die eine Walze (5), eine Einlassöffnung (15) für die Kautschukmischung und eine gewölbte Abdeckung (6) aufweist, die die Oberfläche (51) der Walze (6) in Umfangsrichtung teilweise bedeckt, wobei die Kautschukmischung aus der Einlassöffnung (15) in dem Walzspalt zwischen der gewölbten Abdeckung (6) und der Walze (5) in Richtung einer Extrusionsöffnung (21) gefördert wird, die das Profil des Produktes definiert und die durch eine Wand (20) begrenzt wird, die mit der äußeren Oberfläche (51) der Walze (5) zusammenwirkt, **dadurch gekennzeichnet, dass** die gewölbte Abdeckung (6) an der inneren, in Richtung der Walze orientierten Oberfläche hervorstehende Linien aufweist, um mit der Oberfläche (51) der Walze einen Raum zur Plastifikation der Mischung abzugrenzen, wobei mindestens zwei der Linien sich in etwa axial erstrecken.

2. Vorrichtung nach Anspruch 1, wobei die beiden Linien, die sich in etwa axial erstrecken, von den Linien gebildet werden, die am nächsten an der Extrusionsöffnung liegen.

3. Vorrichtung nach einem der Ansprüche 1 oder 2, wobei der Bereich der gewölbten Abdeckung, der den Plastifizierraum bildet, in Querrichtung von zwei Aufnahmerändern (69, 70) für die Förderverluste der Kautschukmischung begrenzt wird.

4. Vorrichtung nach einem der Ansprüche 1 bis 3, wobei der Bereich der gewölbten Abdeckung (6), der den Plastifizierraum bildet, in Sektoren (67) unterteilt ist, wobei zwei aufeinander folgende Sektoren (67) durch vorspringende Linien (68) getrennt sind, die zueinander und zu den Linien, die sich in etwa axial erstrecken, parallel verlaufen.

5. Vorrichtung nach einem der Ansprüche 1 bis 3, wobei der Bereich der gewölbten Abdeckung (6), der den Plastifizierraum bildet, schraubenförmige Linien aufweist.

6. Vorrichtung nach Anspruch 5, wobei die schraubenförmigen Linien an der gleichen Liniue einen Rechtsgang und einen Linksgang aufweisen.

7. Vorrichtung nach einem der Ansprüche 1 bis 6, wobei die Wand (20) durch die Oberfläche einer Walze gebildet wird.

8. Vorrichtung nach einem der Ansprüche 1 bis 6, wobei die Wand (20) durch eine feste Lamelle gebildet wird.

9. Vorrichtung nach Anspruch 8, wobei die Lamelle (20) eine Vertiefung (201) aufweist, die sich in etwa axial erstreckt und von der gewölbten Abdeckung in geschlossener Stellung der Vorrichtung durch eine in etwa axiale Linie (202) getrennt ist, die sich an der gewölbten Abdeckung befindet, wobei die Vertiefung (201) der Lamelle (20) eine axiale Länge größer als die Länge der Linie aufweist.

10. Vorrichtung nach Anspruch 9, wobei die Tiefe der Vertiefung (201) der Lamelle (20) größer ist als die Tiefe der Sektoren (67) der gewölbten Abdeckung (6).

11. Vorrichtung nach einem der Ansprüche 1 bis 10, bei der das Verhältnis der Dicke des Streifens des abgegebenen Produktes und des Durchgangs zwischen einer der beiden Linien in der Nähe der Extrusionsöffnung (68) und der Oberfläche (51) der Walze (5) mindestens über 1 liegt.

12. Vorrichtung nach einem der Ansprüche 1 bis 11, bei der der Raum zwischen der Wand (20) und der äußeren Oberfläche (51) der Walze (5), der die Höhe der Extrusionsöffnung definiert, unter 5 mm liegt.

13. Vorrichtung nach Anspruch 12, wobei die Höhe der Extrusionsöffnung unter 0,5 mm liegt.

14. Vorrichtung nach Anspruch 13, wobei die Höhe der Extrusionsöffnung unter 0,3 mm liegt.

15. Vorrichtung nach einem der Ansprüche 1 bis 14, wobei die gewölbte Abdeckung (6) schwenkbar um eine Drehachse montiert ist, die von einem mit der Walze (5) fest verbundenen Träger (10) getragen wird.

16. Vorrichtung nach einem der Ansprüche 1 bis 15, die eine zweite Einlassöffnung für eine Kautschukmischung umfasst, die mit der ersten Kautschukmischung identisch oder von ihr verschieden ist, welche sich im Inneren des Plastifizierraums befindet.

17. Vorrichtung nach einem der Ansprüche 9 bis 16, die im Inneren der Vertiefung (201) der Lamelle (20) mehrere Durchgangsöffnungen für Drähte aufweist.

18. Extruder, der einen Extrusionskopf aufweist, welcher eine Vorrichtung nach einem der Ansprüche 1 bis 17 umfasst, wobei die Einlassöffnung (15) der Vorrichtung an dem Ende mindestens einer Extrusionsschnecke an dem Extruder angeordnet ist.

19. Vorrichtung zur Extrusion mehrerer Kautschukmischungen, die mindestens zwei Vorrichtungen nach einem der Ansprüche 1 bis 17 aufweist, die in Drehrichtung einer Trommel nacheinander angeordnet sind, um das nacheinander erfolgende Auflegen mehrerer aufeinander folgender Produkte an der Trommel zu ermöglichen.

20. Vorrichtung zum Kaschieren von zwei profilierten Produkten, die mindestens zwei Vorrichtungen nach einem der Ansprüche 1 bis 17 umfasst, wobei die beiden Vorrichtungen gegenüber so angeordnet sind, dass das profilierte Produkt aus einer der Vorrichtungen direkt am Auslass der entsprechenden Extrusionsöffnungen mit dem anderen Produkt kaschiert wird.

21. Vorrichtung zur Extrusion mit einem Kalander, an dessen Auslass eine Vorrichtung nach einem der Ansprüche 1 bis 17 angeordnet ist.

## Claims

1. Extrusion device (1) for manufacturing a product based on a rubber mix, which comprises a rotary roller (5), an inlet orifice (15) for the said rubber mix and an arch (6) partially circumferentially covering the surface (51) of the roller (5), the rubber mix being delivered from the inlet orifice (15) into the air gap situated between the arch (6) and the roller (5) towards an extrusion orifice (21) defining the profile of the product, delimited by a wall (20) which cooperates with the external surface (51) of the roller (5), **characterized in that** the arch (6) carries, on its internal surface oriented towards the roller, projecting fillets in order to delimit with the surface (51) of the roller a chamber for plasticisation of the mix, at least two of the fillets extending substantially axially.

2. Device according to Claim 1, in which the two fillets extending substantially axially consist of the fillets situated the closest to the extrusion orifice.

3. Device according to either one of Claims 1 or 2, in which the zone of the arch forming the plasticisation chamber is delimited transversely by two reception edges (69, 70) for the rubber mix leakages.

4. Device according to any one of Claims 1 to 3, in which the zone of the arch (6) forming the plasticisation chamber is divided into sectors (67), two consecutive sectors (67) being separated by projecting fillets (68) parallel to each other and to the fillets extending substantially axially.

5. Device according to any one of Claims 1 to 3, in which the zone of the arch (6) forming the plasticisation chamber has helical fillets.

6. Device according to Claim 5, in which the helical fillets have a left-hand thread and a right-hand thread on the same fillet.

7. Device according to any one of Claims 1 to 6, in which the wall (20) is formed by the surface of a roller.

8. Device according to any one of Claims 1 to 6, in which the wall (20) consists of a fixed plate.

9. Device according to Claim 8, in which the plate (20) carries an alveolus (201) extending substantially axially and separated from the arch, in the closed position of the device, by a fillet (202) extending substantially axially (28) carried by the said arch, the alveolus (201) of the plate (20) having an axial length greater than that of the said fillet.

10. Device according to Claim 9, in which the depth of the alveolus (201) in the plate (20) is greater than that of the sectors (67) of the arch (6).

11. Device according to any one of Claims 1 to 10, in which the ratio between the thickness of the product strip emerging and the passage between one of the two fillets close to the extrusion orifice (68) and the surface (51) of the roller (5) is at least greater than 1.

12. Device according to any one of Claims 1 to 11, in which the spacing between the wall (20) and the external surface (51) of the roller (5) defining the height of the extrusion orifice is less than 5 mm.

13. Device according to Claim 12, in which the height of the extrusion orifice is less than 0.5 mm.

14. Device according to Claim 13, in which the height of the extrusion orifice is less than 0.3 mm.

15. Device according to any one of Claims 1 to 14, in which the arch (6) is mounted so as to pivot about a rotation axis carried by a support (10) integral with the roller (5).

16. Device according to any one of Claims 1 to 15, which comprises a second inlet orifice for a rubber mix identical to or different from the first one located inside the plasticisation chamber.

17. Device according to any one of Claims 9 to 16, which comprises several orifices for the passage of cords inside the alveolus (201) in the plate (20).

18. Extruder comprising an extrusion die which comprises a device according to any one of Claims 1 to 17, the inlet orifice (15) of the device being disposed at the end of at least one extrusion screw carried by the extruder.

19. Apparatus for extruding several rubber mixes comprising at least two devices according to any one of Claims 1 to 17 disposed successively in the direction of rotation of a drum to allow the successive deposition on the said drum of several products consecutively.

20. Apparatus for doubling two profiled products which comprises at least two devices according to any one of Claims 1 to 17, the two devices being disposed facing each other so that the profiled product issuing from one of the devices is doubled with the other product directly at the discharge from the respective extrusion orifices.

21. Extrusion apparatus including a calender, at the discharge from which there is disposed a device according to any one of Claims 1 to 17.
